# EUROPEAN PATENT APPLICATION

(11) **EP 4 757 451 A1**
(43) Date of publication of application: **10.06.2026**
(21) Application number: 24847921.4
(22) Date of filing: 04.07.2024
(51) Int. Cl.: H04W 72/0446

(54) **INFORMATION PROCESSING METHOD AND APPARATUS, AND NETWORK DEVICE AND TERMINAL**

(30) Priority: 03.08.2023 CN 202310972832
(71) Applicant: Datang Mobile Communications Equipment Co., Ltd., Beijing 100085 (CN)
(72) Inventor: MIAO, Deshan, Beijing 100085 (CN); SUO, Shiqiang, Beijing 100085 (CN); GAO, Ting, Beijing 100085 (CN)
(74) Representative: Studio Torta S.p.A.
(86) International application number: PCT/CN2024/103508
(87) International publication number: WO 2025/025961

(57) **Abstract**

The present disclosure provides an information transmission method and device, network device and terminal, and relates to the field of communication technologies. The method includes: determining, by a network device, a time-domain length of a first cyclic prefix (CP) for a terminal's signal transmission according to transmission configuration-related information of the terminal; transmitting, by the network device, indication information to the terminal; wherein the indication information is used to indicate the time-domain length of the first CP.

## Description

The present application is filed based on and claims the priority of Chinese Application No. 202310972832.9 filed on August 3, 2023, entitled "information processing method and device, network device and terminal", the disclosure of which are incorporated in their entireties by reference herein.

### TECHNICAL FIELD

The present disclosure relates to the field of communication technologies, and in particular to an information transmission method and device, network device and terminal.

### BACKGROUND

In terrestrial mobile communication systems, Orthogonal frequency division multiplex (OFDM) waveform has been adopted since the 4th generation mobile communication technology (4G) network. The OFDM waveform is characterized by dividing multiple subcarriers within a bandwidth, and signals are transmitted on each subcarrier in an orthogonal manner. In order to reduce signal propagation delay, a cyclic prefix (CP) is usually used as a part of the signal for transmission. The CP includes a part of samples of an OFDM symbol, and its function is to help maintain orthogonality between subcarriers in multipath channel scenarios. In current technologies, the time-domain length of the CP is usually fixed, which leads to the problem of being unable to meet the needs of more application scenarios.

### SUMMARY

The present disclosure provides an information transmission method and device, network device and terminal, which can solve the problem that the current CP time-domain length configuration cannot meet the needs of more application scenarios.

One embodiment of the present disclosure provides an information processing method, including:
determining, by a network device, a time-domain length of a first cyclic prefix (CP) for a terminal's signal transmission according to transmission configuration-related information of the terminal;
transmitting, by the network device, indication information to the terminal; wherein the indication information is used to indicate the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, the determining, by a network device, a time-domain length of a first cyclic prefix (CP) for a terminal's signal transmission according to transmission configuration-related information of the terminal, includes:
in case where the transmission configuration-related information of the terminal includes that the signal transmission of the terminal is downlink transmission, determining, by the network device, that the time-domain length of the first CP for the terminal's signal transmission is equal to 0, or determining that the time-domain length of the first CP for the terminal's signal transmission is greater than 0.

In some embodiments, the determining, by a network device, a time-domain length of a first cyclic prefix (CP) for a terminal's signal transmission according to transmission configuration-related information of the terminal, includes:
in case where the transmission configuration information of the terminal includes the signal transmission time unit, determining, by the network device, a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message; and the first message includes at least one of the following:
system broadcast message;
radio resource control (RRC) message;
medium access control (MAC) message;
downlink control information (DCI).

In some embodiments, the determining, by a network device, a time-domain length of a first cyclic prefix (CP) for a terminal's signal transmission according to transmission configuration-related information of the terminal, includes:
receiving a second message transmitted by the terminal; wherein the second message carries the transmission configuration-related information of the terminal and/or CP configuration request information of the terminal;
determining the time-domain length of the first CP for the terminal's signal transmission, according to the second message and in combination with the transmission configuration-related information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot.

In some embodiments, the determining, by a network device, a time-domain length of a first cyclic prefix (CP) for a terminal's signal transmission according to transmission configuration-related information of the terminal, includes:
determining, by the network device, the time-domain length of the first CP for the terminal's signal transmission according to the transmission configuration-related information of the terminal and subcarrier spacing information.

In some embodiments, the method further includes:
performing an initial access process of the terminal according to the time-domain length of the second CP; wherein the time-domain length of the second CP is preset;
wherein the indication information is transmitted by the network device to the terminal during the initial access process, or is transmitted by the network device to the terminal after the initial access process.

One embodiment of the present disclosure further provides an information processing method, including:
receiving, by a terminal, indication information transmitted by a network device; wherein the indication information is used to indicate a time-domain length of a first CP for the terminal's signal transmission, and the time-domain length of the first CP is determined according to transmission configuration-related information of the terminal;
performing, by the terminal, signal transmission according to the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0.

In some embodiments, in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message; and the first message includes at least one of the following:
system broadcast message;
radio resource control (RRC) message;
medium access control (MAC) message;
downlink control information (DCI).

In some embodiments, before the terminal receives the indication information transmitted by the network device, the method further includes:
transmitting, by the terminal, a second message to the network device; wherein the second message carries transmission configuration-related information of the terminal and/or CP configuration request information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot;
and/or,
the time-domain length of the first CP indicated by the indication information is determined according to the transmission configuration-related information of the terminal and subcarrier spacing information.

In some embodiments, the method further includes:
performing an initial access process according to a time-domain length of the second CP; wherein the time-domain length of the second CP is preset;
wherein the indication information is received during the initial access process, or is received after the initial access process.

One embodiment of the present disclosure further provides an information processing device, including: a memory, a transceiver, and a processor;
wherein the memory is used to store a computer program; the transceiver is used to send and receive data under control of the processor; the processor is used to read the computer program in the memory and perform the following operations:
determining a time-domain length of a first cyclic prefix (CP) for a terminal's signal transmission according to transmission configuration-related information of the terminal;
transmitting indication information to the terminal; wherein the indication information is used to indicate the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, the processor is used to read the computer program in the memory and perform the following operations:
in case where the transmission configuration-related information of the terminal includes that the signal transmission of the terminal is downlink transmission, determining that the time-domain length of the first CP for the terminal's signal transmission is equal to 0, or determining that the time-domain length of the first CP for the terminal's signal transmission is greater than 0;
   and/or,
in case where the transmission configuration information of the terminal includes the signal transmission time unit, determining a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message; and the first message includes at least one of the following:
system broadcast message;
radio resource control (RRC) message;
medium access control (MAC) message;
downlink control information (DCI).

In some embodiments, the processor is used to read the computer program in the memory and perform the following operations:
receiving a second message transmitted by the terminal; wherein the second message carries the transmission configuration-related information of the terminal and/or CP configuration request information of the terminal;
determining the time-domain length of the first CP for the terminal's signal transmission, according to the second message and in combination with the transmission configuration-related information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot.

In some embodiments, the processor is used to read the computer program in the memory and perform the following operations:
determining the time-domain length of the first CP for the terminal's signal transmission according to the transmission configuration-related information of the terminal and subcarrier spacing information.

In some embodiments, the processor is used to read the computer program in the memory and perform the following operations:
performing an initial access process of the terminal according to the time-domain length of the second CP; wherein the time-domain length of the second CP is preset;
wherein the indication information is transmitted by the network device to the terminal during the initial access process, or is transmitted by the network device to the terminal after the initial access process.

One embodiment of the present disclosure provides a network device, including:
a first processing unit used to determine a time-domain length of a first cyclic prefix (CP) for a terminal's signal transmission according to transmission configuration-related information of the terminal;
a transmission unit used to transmit indication information to the terminal; wherein the indication information is used to indicate the time-domain length of the first CP.

One embodiment of the present disclosure provides an information processing device, including: a memory, a transceiver, and a processor;
wherein the memory is used to store a computer program; the transceiver is used to send and receive data under control of the processor; the processor is used to read the computer program in the memory and perform the following operations:
receiving indication information transmitted by a network device; wherein the indication information is used to indicate a time-domain length of a first CP for the terminal's signal transmission, and the time-domain length of the first CP is determined according to transmission configuration-related information of the terminal;
performing signal transmission according to the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0;
and/or,
in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message; and the first message includes at least one of the following:
system broadcast message;
radio resource control (RRC) message;
medium access control (MAC) message;
downlink control information (DCI).

In some embodiments, the processor is used to read the computer program in the memory and perform the following operations:
transmitting a second message to the network device; wherein the second message carries transmission configuration-related information of the terminal and/or CP configuration request information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot;
and/or,
the time-domain length of the first CP indicated by the indication information is determined according to the transmission configuration-related information of the terminal and subcarrier spacing information.

In some embodiments, the processor is used to read the computer program in the memory and perform the following operations:
performing an initial access process according to a time-domain length of the second CP; wherein the time-domain length of the second CP is preset;
wherein the indication information is received during the initial access process, or is received after the initial access process.

One embodiment of the present disclosure provides a terminal, including:
a receiving unit used to receive indication information transmitted by a network device; wherein the indication information is used to indicate a time-domain length of a first CP for the terminal's signal transmission, and the time-domain length of the first CP is determined according to transmission configuration-related information of the terminal;
a first processing unit used to perform signal transmission according to the time-domain length of the first CP.

One embodiment of the present disclosure provides a processor-readable storage medium, including a computer program stored thereon; wherein the computer program is used to cause a processor to execute the steps of the information processing method on the network device side as described above, or to cause the processor to execute the steps of the information processing method on the terminal side as described above.

The beneficial effects of the above technical solution of the present disclosure are as follows.

In the embodiments of the present disclosure, the network device can flexibly configure the time-domain length of the first CP for the terminal's signal transmission according to the transmission configuration-related information of the terminal. That is, the time-domain length of the first CP for signal transmission configured by the network device for the terminal is no longer limited to the subcarrier spacing, which can meet the requirements of more application scenarios, thereby solving the problem that the current CP time-domain length configuration cannot meet the requirements of more application scenarios.

### BRIEF DESCRIPTION OF THE DRAWINGS

FIG. 1 is a flow chart of an information processing method at a network device side according to an embodiment of the present disclosure;
FIG. 2 is a flow chart of an information processing method at a terminal side according to an embodiment of the present disclosure;
FIG. 3 is a block diagram of an information processing device at a network device side according to an embodiment of the present disclosure;
FIG. 4 is a block diagram of a network device according to an embodiment of the present disclosure;
FIG. 5 is a block diagram of an information processing device at a terminal side according to an embodiment of the present disclosure; and
FIG. 6 is a block diagram of a terminal according to an embodiment of the present disclosure.

### DETAILED DESCRIPTION

In order to make technical problems to be solved, technical solutions and advantages of the present disclosure clearer, the following will be described in detail in conjunction with the accompanying drawings and specific embodiments. In the following description, specific details such as configurations and components are provided solely for the purpose of facilitating a complete understanding of the embodiments of the present disclosure. Accordingly, those skilled in the art will recognize that various changes and modifications can be made to the embodiments described herein without departing from the scope and spirit of the present disclosure. Descriptions of well-known functions and constructions are omitted for clarity and conciseness.

It is to be understood that "in one embodiment" or "in an embodiment" throughout the specification mean that a particular feature, structure, or characteristic described in connection with the embodiment is included in at least one embodiment of the present disclosure. Thus, the appearances of "in one embodiment" or "in an embodiment" in various places throughout the specification are not necessarily all referring to the same embodiment. Further, the specific features, structures, or characteristics may be combined in any suitable manner in one or more embodiments.

In various embodiments of the present disclosure, it is to be understood that the numerical order of the following processes does not imply a sequence of execution. The order of execution should be determined by their inherent functionality and logic, and shall not be construed as limiting the implementation process of the embodiments herein.

Additionally, the terms "system" and "network" may be used interchangeably herein.

The technical solution of the embodiment of the present disclosure may be applied to various systems, especially 5th Generation Mobile Communication Technology (5G) system and 6th Generation Mobile Communication Technology (6G) system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system, 6th Generation (6G). Each of these systems includes a terminal device and a network device. Each system further includes a core network part, e.g., an Evolved Packet System (EPS) or 5G system (5GS/5GC), or 6G system.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

An introduction to the related technologies associated with the present disclosure is provided below.

In 4G system design, two CP configurations are defined: normal CP and extended CP, which are suitable for different scenarios. The normal CP has a shorter time-domain length and is applicable to common urban and rural cellular network environments. The extended CP has a longer time-domain length and is suitable for scenarios with more complex signal transmission environments and longer multipath delays, such as mountainous terrain.

In 5G system design, the CP configuration from the 4G system has been basically inherited. However, the 5G system introduces more subcarrier parameter configurations. For instance, in the 5G system, the subcarrier spacing ranges from 15kHz to 240kHz, and different subcarrier spacings have corresponding CP time-domain lengths.

The CP time-domain length of the 4G system and the 5G system has a strict correspondence with the subcarrier spacing, and there are only two modes: normal CP and extended CP. That is, the CP time-domain length of an OFDM symbol is determined according to the subcarrier spacing configuration information. Since the CP time-domain length is limited by the subcarrier spacing configuration information (for example, when the subcarrier spacing is larger, the corresponding CP time-domain length will be smaller), this limitation may fail to meet the needs of more application scenarios. For example, in satellite communications, the multipath propagation delay is small, and the required CP time-domain length can be shorter, but this may necessitate the use of a smaller subcarrier spacing; in some scenarios, a larger subcarrier spacing is required to reduce the impact of frequency deviation, but due to factors such as large coverage radius and timing synchronization errors, a longer CP time-domain length is expected. This CP time-domain length determined based on the subcarrier spacing configuration information, imposes significant limitations in various application scenarios, resulting in suboptimal resource utilization and performance.

One embodiment of the present disclosure provides an information processing method and device, network device and terminal, which can solve the problem that the current CP time-domain length configuration cannot meet the needs of more application scenarios. The method and the device (or network device or terminal) are based on the same application concept. Since the principles of solving the problem by the method and the device (or network device or terminal) are similar, implementation of the method and the device (or network device or terminal) can refer to each other, and the repeated parts will not be repeated.

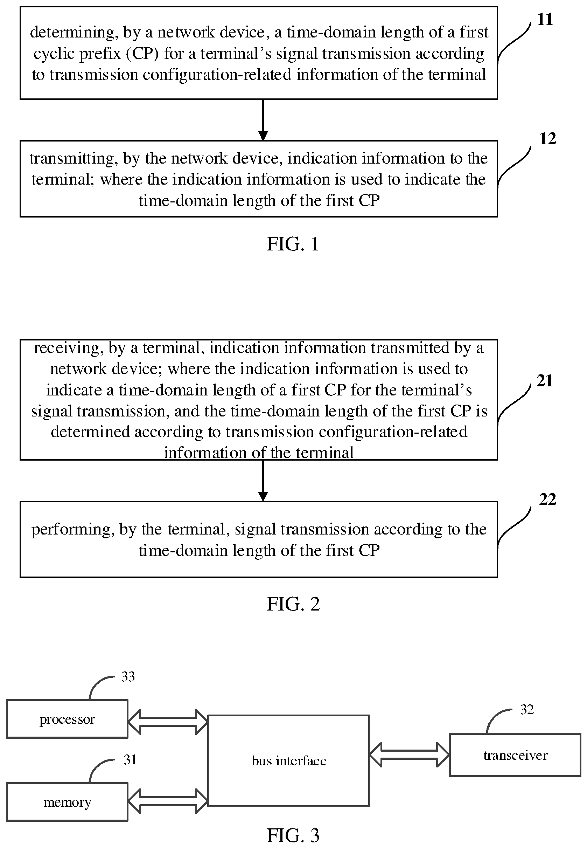

As shown in FIG. 1, one embodiment of the present disclosure provides an information processing method, which includes the following steps.

Step 11: determining, by a network device, a time-domain length of a first cyclic prefix (CP) for a terminal's signal transmission according to transmission configuration-related information of the terminal.

In some embodiments, the network device may determine the time-domain length of the first CP corresponding to the transmission configuration-related information of the terminal, according to a pre-set mapping relationship between different transmission configuration-related information and time-domain lengths of CPs. For example, the pre-set mapping relationship between different transmission configuration-related information and the time-domain lengths of the CPs may be configured by the network device or defined by a protocol, etc., which are not limited thereto in the embodiments of the present disclosure.

For example, the network device can obtain the transmission configuration-related information of the terminal based on its own capabilities, or can also receive the transmission configuration-related information of the terminal reported by the terminal, etc., so that the time-domain length of the first CP for signal transmission can be configured or updated for the terminal based on the transmission configuration-related information of the terminal, which are not limited thereto in the embodiments of the present disclosure.

In some embodiments, the terminal's signal transmission includes but is not limited to at least one of the following: the terminal transmitting a signal to the network device, the terminal receiving a signal transmitted by the network device, the terminal transmitting a signal to another terminal via a side-link, the terminal receiving a signal transmitted by another terminal via a side-link, the terminal transmitting a sensing signal to sense environmental information, the terminal receiving a sensing signal to perform sensing processing, etc., which are not limited thereto in the embodiments of the present disclosure.

Step 12: transmitting, by the network device, indication information to the terminal; where the indication information is used to indicate the time-domain length of the first CP.

In some embodiments, the indication information may indicate the time-domain length of the first CP in an explicit indication manner, such as a first indication field in the indication information is used to indicate the time-domain length of the first CP. Alternatively, the indication information may also indicate the time-domain length of the first CP in an implicit indication manner, for example, a first indication field in the indication information is used to indicate a CP type of the first CP, and the terminal can learn the time-domain length of the first CP based on the CP type of the first CP. Alternatively, the indication information is used to indicate the CP type and time-domain length of the first CP, for example, the indication information may include a first indication field and a second indication field, the first indication field is used to indicate a CP type of the first CP, and the second indication field is used to indicate a time-domain length of the first CP. The first indication field and the second indication field may be carried in the same signaling or in different signaling, which are not limited thereto in the embodiments of the present disclosure.

In one embodiment, the network device can flexibly configure the time-domain length of the first CP for the terminal's signal transmission according to the transmission configuration-related information of the terminal. That is, the time-domain length of the first CP for signal transmission configured by the network device for the terminal is no longer limited to the subcarrier spacing, which can meet the requirements of more application scenarios and facilitating realization of optimal resource utilization and performance, thereby solving the problem that the current CP time-domain length configuration cannot meet the requirements of more application scenarios.

In some embodiments, the transmission configuration-related information of the terminal includes at least one of the following:
a terminal type or capability of the terminal; for example, the terminal type or capability includes but is not limited to at least one of the following: frequency band, bandwidth, power, number of antennas, duplex mode, etc. supported by the terminal, which are not limited thereto in the embodiments of the present disclosure; for example, the network device pre-configures or pre-defines by the protocol: correspondence between different terminal types or capabilities and CP time-domain lengths, so that the network device can flexibly configure the CP time-domain length of signal transmission for different terminals based on the terminal type or capability of different terminals;
mobile state information of the terminal; for example, the mobile state information includes but is not limited to at least one of the following: whether the terminal is moving, moving speed of the terminal (such as an absolute moving speed of the terminal, or a moving speed of the terminal relative to the network device, etc.), moving trajectory of the terminal, etc., which are not limited thereto in the embodiments of the present disclosure; for example, the network device pre-configures or pre-defines by the protocol: correspondence between different mobile state information and CP time-domain lengths, so that the network device can flexibly configure the CP time-domain length of signal transmission for the terminal based on the mobile state information of different terminals, or the mobile state information of the same terminal at different times, etc.;
the signal transmission of the terminal being uplink transmission or downlink transmission; for example, the network device pre-configures or pre-defines by the protocol: uplink transmission and downlink transmission correspond to different CP time-domain lengths to improve resource utilization efficiency; for example, the network device can flexibly configure the CP time-domain length of signal transmission for the terminal based on the uplink transmission or downlink transmission of the terminal;
deployment scenario of the terminal; for example, the deployment scenario includes but is not limited to at least one of the following: indoor scenario, urban scenario, mountain scenario, satellite channel scenario, etc., which are not limited thereto in the embodiments of the present disclosure; for example, the network device pre-configures or pre-defines by the protocol: correspondence between different deployment scenarios and CP time-domain lengths, so that the network device can flexibly configure the CP time-domain length of signal transmission for the terminal based on the deployment scenarios of different terminals, or the deployment scenarios of the same terminal at different times, etc.;
synchronization requirement of the terminal; for example, the synchronization requirement includes but is not limited to at least one of the following: requirement of tight synchronization mode (for example, the terminal and the network device need to maintain precise synchronization), requirement of loose synchronization mode (for example, synchronization accuracy of the terminal and the network device allows a certain error), etc., which are not limited thereto in the embodiments of the present disclosure; for example, the network device pre-configures or pre-defines by the protocol: correspondence between different synchronization requirements and the CP time-domain lengths, so that the network device can flexibly configure the CP time-domain length of signal transmission for the terminal based on the synchronization requirements of different terminals, or the synchronization requirements of the same terminal at different times, etc.;
signal transmission time unit; for example, the signal transmission time unit includes but is not limited to at least one of the following: a time unit for different beam data scheduling, a time unit for different user data scheduling, etc.; it is to be noted that the signal transmission time unit here can be a time unit for different beam data scheduling, or a time unit for different user data scheduling; for example, within the time unit, it can serve user terminals in one beam direction, or serve one separate user terminal, etc., which are not limited thereto in the embodiments of the present disclosure; for example, the network device pre-configures or pre-defines by the protocol: correspondence between one or more symbols in different time units and CP time-domain lengths, so that the network device can flexibly configure the CP time-domain length of signal transmission for the terminal based on different time units (such as a time unit for beam data scheduling and a time unit for user data scheduling, or different time units for beam data scheduling, or different time units for user data scheduling, etc.).

In some embodiments, the determining, by a network device, a time-domain length of a first cyclic prefix (CP) for a terminal's signal transmission according to transmission configuration-related information of the terminal, includes:
in case where the transmission configuration-related information of the terminal includes that the signal transmission of the terminal is downlink transmission, determining, by the network device, that the time-domain length of the first CP for the terminal's signal transmission is equal to 0, or determining that the time-domain length of the first CP for the terminal's signal transmission is greater than 0.

For example, the network device pre-configures or pre-defines by the protocol: during downlink transmission, the time-domain length of the CP can be 0 or greater than 0. In this way, the network device can configure the time-domain length of the first CP for the terminal's signal transmission to be 0 or greater than 0 when the terminal performs downlink transmission, based on consideration of a relatively small multipath delay in the downlink transmission.

It is to be noted here that downlink transmission is single-point to multi-point, and uplink transmission is multi-point to single-point. Therefore, there is no synchronization error between user terminals in downlink transmission, and the primary impact comes from multipath effects. In scenarios dominated by line-of-sight paths, the time-domain length of the CP can be shortened or even set to zero. Therefore, the time-domain length of the CP for downlink transmission and the time-domain length of the CP for uplink transmission can be configured independently.

In some embodiments, the determining, by a network device, a time-domain length of a first cyclic prefix (CP) for a terminal's signal transmission according to transmission configuration-related information of the terminal, includes:
in case where the transmission configuration information of the terminal includes the signal transmission time unit, determining, by the network device, a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

For example, based on a configurable signal transmission time unit (such as 1ms or 1 slot), the network device can flexibly configure a time-domain length of a first CP of a first symbol and/or a time-domain length of a CP of a second symbol in the signal transmission time unit, and the time-domain length of the first CP of the first symbol is greater than the time-domain length of the first CP of the second symbol.

For example, the network device can flexibly configure the time-domain lengths of the first symbol and the second symbol in the signal transmission time unit, respectively. Considering that a first symbol in a signal transmission time unit needs to bear the function of synchronization correction, the first symbol in the signal transmission time unit can be set to adopt a longer CP time-domain length. For example, the network device can configure the time-domain length of the first CP of the first symbol to be equal to a time-domain length of an extended CP, and the time-domain length of the first CP of the second symbol to be equal to a time-domain length of a normal CP. Alternatively, the network device preconfigures or the protocol predefines: the time-domain length of the first CP of the first symbol in the signal transmission time unit (for example, adopting the time-domain length of the extended CP), and supporting the network device to flexibly configure the time-domain length of the first CP of the second symbol in the signal transmission time unit (at this point, the time-domain length of the first CP of the first symbol is greater than the time-domain length of the first CP of the second symbol). Alternatively, the network device preconfigures or the protocol predefines: the time-domain length of the first CP of the second symbol in the signal transmission time unit (for example, adopting the time-domain length of the normal CP), and supporting the network device to flexibly configure the time-domain length of the first CP of the first symbol in the signal transmission time unit (at this point, the time-domain length of the first CP of the first symbol is greater than the time-domain length of the first CP of the second symbol), etc., which are not limited to this in the embodiments of the present disclosure. It is to be noted that the first symbol can adopt a longer time-domain length for the CP, for example, the first symbol can adopt an extended CP, or adopt a normal CP plus a CP extension unit, or be configured as a complete symbol and other possible forms, and the second symbol and subsequent symbols may have a shorter CP, or even a CP length of 0, etc.

In some embodiments, the first symbol is a first symbol in the time unit, and the second symbol is a symbol other than the first symbol in the time unit.

By taking the beam scanning scenario as an example, that is, the time unit is a time unit used for scheduling data of different beams, the network device configures a first one symbol (i.e., the first symbol) in the time unit for signal synchronization tracking. Since the first symbol used for signal synchronization tracking has a longer CP time-domain length, it can assist the terminal in correcting the synchronization error.

By taking user data scheduling as an example, that is, the time unit is a time unit used for scheduling different user data, the network device configures a first one symbol (i.e., the first symbol) in the time unit for signal synchronization tracking. Since the first symbol used for signal synchronization tracking has a longer CP time-domain length, it can assist the terminal in synchronization compensation and correction.

In some embodiments, the indication information is carried by a first message. That is, the transmitting, by the network device, indication information to the terminal, includes:
transmitting, by the network device, a first message to the terminal; where the first message carries the indication information.

In some embodiments, the first message includes at least one of the following:
system broadcast message;
radio resource control (RRC) message;
medium access control (MAC) message;
downlink control information (DCI).

The indication information is used to notify the terminal to obtain the currently used CP type or CP time-domain length. At a moment of receiving the indication information, the terminal still uses the previous CP time-domain length; and the new CP type or CP time-domain length can only be used after the indication information takes effect. In some embodiments, the network device may also agree or indicate an effective time interval of the new CP type or CP time-domain length of the terminal. It is to be noted that the network device can configure different CP types or CP time-domain lengths for different terminals, and can dynamically modify the CP type or CP time-domain length for the terminal.

In some embodiments, the determining, by a network device, a time-domain length of a first cyclic prefix (CP) for a terminal's signal transmission according to transmission configuration-related information of the terminal, includes:
receiving, by the network device, a second message transmitted by the terminal; where the second message carries the transmission configuration-related information of the terminal and/or CP configuration request information of the terminal;
determining, by the network device, the time-domain length of the first CP for the terminal's signal transmission, according to the second message and in combination with the transmission configuration-related information of the terminal.

In this embodiment, the terminal is supported to request the network device to flexibly configure the time-domain length of the first CP for the terminal's signal transmission. In this way, based on different transmission configuration-related information, the terminal can request the network device to flexibly configure the time-domain length of the first CP for the terminal's signal transmission.

For example, in case that the second message transmitted by the terminal to the network device carries the CP configuration request information of the terminal, the network device can, based on the CP configuration request information of the terminal and provided that it is able to obtain the transmission configuration-related information of the terminal (for example, the network device may know that the current transmission is downlink, and have already obtained a terminal type or capabilities in other procedures), configure the time-domain length of the first CP for signal transmission for the terminal according to the terminal's request. In addition, the CP configuration request information may also include the transmission configuration-related information of the terminal, and may also include CP time-domain length information, etc.; the network device obtains the transmission configuration-related information of the terminal, and determines the time-domain length of the first CP for the terminal's signal transmission according to the transmission configuration-related information of the terminal, or directly configures a corresponding CP time-domain length for the terminal according to the CP time-domain length information of the terminal.

Alternatively, in case that the second message transmitted by the terminal to the network device carries the transmission configuration-related information of the terminal, based on an implicit indication of the transmission configuration-related information of the terminal, the network device can determine that the terminal requests the network device to configure the time-domain length of the first CP for the terminal's signal transmission according to the transmission configuration-related information of the terminal.

Alternatively, in case that the second message transmitted by the terminal to the network device carries the terminal's transmission configuration-related information and the terminal's CP configuration request information, the network device can determine, based on the terminal's CP configuration request information, a time-domain length of a first CP for the terminal's signal transmission corresponding to the terminal's transmission configuration-related information, etc., which are not limited in the embodiments of the present disclosure.

In some embodiments, the second message includes at least one of the following:
RRC message;
MAC message;
messages carried by Physical Uplink Control Channel (PUCCH).

In some embodiments, on the basis that the network device supports flexible configuration of the time-domain length of the first CP for the terminal's signal transmission, the CP time-domain length and the number of symbols in a slot can be in a one-to-one correspondence, that is, when the network device configures the first CP time-domain length for the terminal's signal transmission, the network device and the terminal can determine the number of symbols in a slot based on the first CP time-domain length.

Alternatively, on the basis that the network device supports flexible configuration of the time-domain length of the first CP for the terminal's signal transmission, the CP time-domain length may also correspond to multiple numbers of symbols in a slot, that is, one CP time-domain length corresponds to a set of symbol numbers, and the set of symbol numbers includes multiple numbers of symbols (for example, one slot includes 14 symbols, or one slot includes 12 symbols, or one slot includes 15 symbols, etc., which are not limited in the embodiments of the present disclosure). In some embodiments, when the indication information transmitted by the network device to the terminal indicates the time-domain length of the first CP for the terminal's signal transmission, the indication information may also be used to indicate the number of symbols in a slot. For example, the number of symbols in a slot indicated by the indication information may be selected from the set of symbol numbers, and different numbers of symbols may be configured for different subframes, etc., which are not limited in the embodiments of the present disclosure.

It is to be noted that in the embodiment of the present disclosure, the length of the slot can be expanded as the size of the symbol changes. For example, if the indication information indicates that a slot includes 14 symbols, the corresponding slot length is 1ms; if the indication information indicates that a slot includes 28 symbols, the corresponding slot length is a length of 28 symbols. However, no matter how long the different slots are, the CP time-domain length of the first symbol is longer than the CP time-domain lengths of other symbols in the slot.

In some embodiments, the determining, by a network device, a time-domain length of a first cyclic prefix (CP) for a terminal's signal transmission according to transmission configuration-related information of the terminal, includes:
determining, by the network device, the time-domain length of the first CP for the terminal's signal transmission according to the transmission configuration-related information of the terminal and subcarrier spacing information.

For example, the network device preconfigures or the protocol predefines: corresponding relationship between a combination of the transmission configuration-related information and different subcarrier spacing information, and the CP time-domain length. In this way, the network device can determine the time-domain length of the first CP of the terminal's signal transmission based on the transmission configuration-related information of the terminal and the subcarrier spacing information. Alternatively, in case that the indication information transmitted by the network device indicates the CP time-domain length determined by the network device according to the transmission configuration-related information of the terminal, the terminal can determine, according to the network device configuration or protocol definition, the time-domain length of the first CP of the terminal's signal transmission based on the CP time-domain length indicated by the indication information and the subcarrier spacing information etc., which are not limited in the embodiments of the present disclosure.

In some embodiments, the information processing method further includes:
performing, by the network device, an initial access process of the terminal according to the time-domain length of the second CP; where the time-domain length of the second CP is preset.

The indication information is transmitted by the network device to the terminal during the initial access process, or is transmitted by the network device to the terminal after the initial access process.

For example, the preset time-domain length of the second CP may be a CP time-domain length for initial access of the terminal configured by the network device or defined by the protocol. Since the terminal does not know which CP type or CP time-domain length should be used when initially accessing, the terminal may use a certain CP type or CP time-domain length to search for the initial signal based on the agreement of the protocol.

For example, the process of the network device transmitting the indication information to the terminal during the initial access process may be: the terminal searches for synchronization signals based on the pre-set time-domain length of the second CP and then obtains a system message; after obtaining the system message, based on the indication of the system message, the terminal obtains the time-domain length of the first CP for the signal transmission indicated by the network device, which is not limited in the embodiments of the present disclosure.

For example, the process of the network device transmitting the indication information to the terminal after the initial access process may be: the terminal searches for synchronization signals based on the pre-set time-domain length of the second CP and then performs the initial access process; after completing the initial access process, the terminal can obtain an RRC-specific signaling message, and based on indication of the signaling message, obtain the time-domain length of the first CP for the signal transmission indicated by the network device, which is not limited in the embodiments of the present disclosure.

The network device involved in the embodiment of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

As shown in FIG. 2, one embodiment of the present disclosure further provides an information processing method, including the following steps:
Step 21: receiving, by a terminal, indication information transmitted by a network device; where the indication information is used to indicate a time-domain length of a first CP for the terminal's signal transmission, and the time-domain length of the first CP is determined according to transmission configuration-related information of the terminal.

In some embodiments, the network device may determine the time-domain length of the first CP corresponding to the transmission configuration-related information of the terminal, according to a pre-set mapping relationship between different transmission configuration-related information and time-domain lengths of CPs. For example, the pre-set mapping relationship between different transmission configuration-related information and the time-domain lengths of the CPs may be configured by the network device or defined by a protocol, etc., which are not limited thereto in the embodiments of the present disclosure.

For example, the network device can obtain the transmission configuration-related information of the terminal based on its own capabilities, or can also receive the transmission configuration-related information of the terminal reported by the terminal, etc., so that the network device can configure or update the time-domain length of the first CP for signal transmission for the terminal based on the transmission configuration-related information of the terminal, which are not limited thereto in the embodiments of the present disclosure.

In some embodiments, the indication information may indicate the time-domain length of the first CP in an explicit indication manner, such as a first indication field in the indication information is used to indicate the time-domain length of the first CP. Alternatively, the indication information may also indicate the time-domain length of the first CP in an implicit indication manner, for example, a first indication field in the indication information is used to indicate a CP type of the first CP, and the terminal can learn the time-domain length of the first CP based on the CP type of the first CP. Alternatively, the indication information is used to indicate the CP type and time-domain length of the first CP, for example, the indication information may include a first indication field and a second indication field, the first indication field is used to indicate a CP type of the first CP, and the second indication field is used to indicate a time-domain length of the first CP. The first indication field and the second indication field may be carried in the same signaling or in different signaling, which are not limited thereto in the embodiments of the present disclosure.

Step 22: performing, by the terminal, signal transmission according to the time-domain length of the first CP.

In some embodiments, the terminal's signal transmission includes but is not limited to at least one of the following: the terminal transmitting a signal to the network device, the terminal receiving a signal transmitted by the network device, the terminal transmitting a signal to another terminal via a side-link, the terminal receiving a signal transmitted by another terminal via a side-link, the terminal transmitting a sensing signal to sense environmental information, the terminal receiving a sensing signal to perform sensing processing, etc., which are not limited thereto in the embodiments of the present disclosure.

In one embodiment, the network device can flexibly configure the time-domain length of the first CP for the terminal's signal transmission according to the transmission configuration-related information of the terminal. That is, the time-domain length of the first CP for signal transmission configured by the network device for the terminal is no longer limited to the subcarrier spacing, which can meet the requirements of more application scenarios and facilitating realization of optimal resource utilization and performance, thereby solving the problem that the current CP time-domain length configuration cannot meet the requirements of more application scenarios.

In some embodiments, the transmission configuration-related information of the terminal includes at least one of the following:
a terminal type or capability of the terminal; for example, the terminal type or capability includes but is not limited to at least one of the following: frequency band, bandwidth, etc. supported by the terminal, which are not limited thereto in the embodiments of the present disclosure; for example, the network device pre-configures or pre-defines by the protocol: correspondence between different terminal types or capabilities and CP time-domain lengths, so that the network device can flexibly configure the CP time-domain length of signal transmission for different terminals based on the terminal type or capability of different terminals;
mobile state information of the terminal; for example, the mobile state information includes but is not limited to at least one of the following: whether the terminal is moving, moving speed of the terminal (such as an absolute moving speed of the terminal, or a moving speed of the terminal relative to the network device, etc.), moving trajectory of the terminal, etc., which are not limited thereto in the embodiments of the present disclosure; for example, the network device pre-configures or pre-defines by the protocol: correspondence between different mobile state information and CP time-domain lengths, so that the network device can flexibly configure the CP time-domain length of signal transmission for the terminal based on the mobile state information of different terminals, or the mobile state information of the same terminal at different times, etc.;
the signal transmission of the terminal being uplink transmission or downlink transmission; for example, the network device pre-configures or pre-defines by the protocol: uplink transmission and downlink transmission correspond to different CP time-domain lengths to improve resource utilization efficiency; for example, the network device can flexibly configure the CP time-domain length of signal transmission for the terminal based on the uplink transmission or downlink transmission of the terminal;
deployment scenario of the terminal; for example, the deployment scenario includes but is not limited to at least one of the following: indoor scenario, urban scenario, mountain scenario, satellite channel scenario, etc., which are not limited thereto in the embodiments of the present disclosure; for example, the network device pre-configures or pre-defines by the protocol: correspondence between different deployment scenarios and CP time-domain lengths, so that the network device can flexibly configure the CP time-domain length of signal transmission for the terminal based on the deployment scenarios of different terminals, or the deployment scenarios of the same terminal at different times, etc.;
synchronization requirement of the terminal; for example, the synchronization requirement includes but is not limited to at least one of the following: requirement of tight synchronization mode (for example, the terminal and the network device need to maintain precise synchronization), requirement of loose synchronization mode (for example, synchronization accuracy of the terminal and the network device allows a certain error), etc., which are not limited thereto in the embodiments of the present disclosure; for example, the network device pre-configures or pre-defines by the protocol: correspondence between different synchronization requirements and the CP time-domain lengths, so that the network device can flexibly configure the CP time-domain length of signal transmission for the terminal based on the synchronization requirements of different terminals, or the synchronization requirements of the same terminal at different times, etc.;
signal transmission time unit; for example, the signal transmission time unit includes but is not limited to at least one of the following: a time unit for different beam data scheduling, a time unit for different user data scheduling, etc.; it is to be noted that the signal transmission time unit here can be a time unit for different beam data scheduling, or a time unit for different user data scheduling; for example, within the time unit, it can serve user terminals in one beam direction, or serve one separate user terminal, etc., which are not limited thereto in the embodiments of the present disclosure; for example, the network device pre-configures or pre-defines by the protocol: correspondence between one or more symbols in different time units and CP time-domain lengths, so that the network device can flexibly configure the CP time-domain length of signal transmission for the terminal based on different time units (such as a time unit for beam data scheduling and a time unit for user data scheduling, or different time units for beam data scheduling, or different time units for user data scheduling, etc.).

In some embodiments, in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0.

For example, the network device pre-configures or pre-defines by the protocol: during downlink transmission, the time-domain length of the CP can be 0 or greater than 0. In this way, the network device can configure the time-domain length of the first CP for the terminal's signal transmission to be 0 or greater than 0 when the terminal performs downlink transmission, based on consideration of a relatively small multipath delay in the downlink transmission. That is, in the embodiment of the present disclosure, it supports the terminal to use a CP with a time-domain length of 0 during downlink transmission, thereby improving the system capacity.

It is to be noted here that downlink transmission is single-point to multi-point, and uplink transmission is multi-point to single-point. Therefore, there is no synchronization error between user terminals in downlink transmission, and the primary impact comes from multipath effects. In scenarios dominated by line-of-sight paths, the time-domain length of the CP can be shortened or even set to zero. Therefore, the time-domain length of the CP for downlink transmission and the time-domain length of the CP for uplink transmission can be configured independently.

In some embodiments, in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

For example, based on a configurable signal transmission time unit (such as 1ms or 1 slot), the network device can flexibly configure a time-domain length of a first CP of a first symbol and/or a time-domain length of a CP of a second symbol in the signal transmission time unit, and the time-domain length of the first CP of the first symbol is greater than the time-domain length of the first CP of the second symbol.

For example, the network device can flexibly configure the time-domain lengths of the first symbol and the second symbol in the signal transmission time unit, respectively. Considering that a first symbol in a signal transmission time unit needs to bear the function of synchronization correction, the first symbol in the signal transmission time unit can be set to adopt a longer CP time-domain length. For example, the network device can configure the time-domain length of the first CP of the first symbol to be equal to a time-domain length of an extended CP, and the time-domain length of the first CP of the second symbol to be equal to a time-domain length of a normal CP. Alternatively, the network device preconfigures or the protocol predefines: the time-domain length of the first CP of the first symbol in the signal transmission time unit (for example, adopting the time-domain length of the extended CP), and supporting the network device to flexibly configure the time-domain length of the first CP of the second symbol in the signal transmission time unit (at this point, the time-domain length of the first CP of the first symbol is greater than the time-domain length of the first CP of the second symbol). Alternatively, the network device preconfigures or the protocol predefines: the time-domain length of the first CP of the second symbol in the signal transmission time unit (for example, adopting the time-domain length of the normal CP), and supporting the network device to flexibly configure the time-domain length of the first CP of the first symbol in the signal transmission time unit (at this point, the time-domain length of the first CP of the first symbol is greater than the time-domain length of the first CP of the second symbol), etc., which are not limited to this in the embodiments of the present disclosure.

It is to be noted that the first symbol can adopt a longer time-domain length for the CP, for example, the first symbol can adopt an extended CP, or adopt a normal CP plus a CP extension unit, or be configured as a complete symbol and other possible forms, and the second symbol and subsequent symbols may have a shorter CP, or even a CP length of 0, etc.

In some embodiments, the first symbol is a first symbol in the time unit, and the second symbol is a symbol other than the first symbol in the time unit.

By taking the beam scanning scenario as an example, that is, the time unit is a time unit used for scheduling data of different beams, the network device configures a first one symbol (i.e., the first symbol) in the time unit for signal synchronization tracking. Since the first symbol used for signal synchronization tracking has a longer CP time-domain length, the terminal can correct the synchronization error.

By taking user data scheduling as an example, that is, the time unit is a time unit used for scheduling different user data, the network device configures a first one symbol (i.e., the first symbol) in the time unit for signal synchronization tracking. Since the first symbol used for signal synchronization tracking has a longer CP time-domain length, the terminal can perform synchronization compensation and correction.

In some embodiments, the indication information is carried by a first message. That is, the receiving, by the terminal, the indication information transmitted by the network device, includes:
receiving, by the terminal, a first message transmitted by the network device; where the first message carries the indication information.

In some embodiments, the first message includes at least one of the following:
system broadcast message;
radio resource control (RRC) message;
medium access control (MAC) message;
downlink control information (DCI).

The indication information is used to notify the terminal to obtain the currently used CP type or CP time-domain length. At a moment of receiving the indication information, the terminal still uses the previous CP time-domain length; and the new CP type or CP time-domain length can only be used after the indication information takes effect. In some embodiments, the network device may also agree or indicate an effective time interval of the new CP type or CP time-domain length of the terminal. It is to be noted that the network device can configure different CP types or CP time-domain lengths for different terminals, and can dynamically modify the CP type or CP time-domain length for the terminal.

In some embodiments, before the terminal receives the indication information transmitted by the network device, the method further includes:
transmitting, by the terminal, a second message to the network device; where the second message carries transmission configuration-related information of the terminal and/or CP configuration request information of the terminal.

In some embodiments, the indication information is transmitted by the network device according to the second message.

In this embodiment, the terminal is supported to request the network device to flexibly configure the time-domain length of the first CP for the terminal's signal transmission. In this way, based on different transmission configuration-related information, the terminal can request the network device to flexibly configure the time-domain length of the first CP for the terminal's signal transmission.

For example, in case that the second message transmitted by the terminal to the network device carries the CP configuration request information of the terminal, the network device can, based on the CP configuration request information of the terminal and provided that it is able to obtain the transmission configuration-related information of the terminal (for example, the network device may know that the current transmission is downlink, and have already obtained a terminal type or capabilities in other procedures), configure the time-domain length of the first CP for signal transmission for the terminal according to the terminal's request. In addition, the CP configuration request information may also include the transmission configuration-related information of the terminal, and may also include CP time-domain length information, etc.; the network device obtains the transmission configuration-related information of the terminal, and determines the time-domain length of the first CP for the terminal's signal transmission according to the transmission configuration-related information of the terminal, or directly configures a corresponding CP time-domain length for the terminal according to the CP time-domain length information of the terminal.

Alternatively, in case that the second message transmitted by the terminal to the network device carries the transmission configuration-related information of the terminal, based on an implicit indication of the transmission configuration-related information of the terminal, the network device can determine that the terminal requests the network device to configure the time-domain length of the first CP for the terminal's signal transmission according to the transmission configuration-related information of the terminal.

Alternatively, in case that the second message transmitted by the terminal to the network device carries the terminal's transmission configuration-related information and the terminal's CP configuration request information, the network device can determine, based on the terminal's CP configuration request information, a time-domain length of a first CP for the terminal's signal transmission corresponding to the terminal's transmission configuration-related information, etc., which are not limited in the embodiments of the present disclosure.

In some embodiments, the second message includes at least one of the following:
RRC message;
MAC message;
messages carried by Physical Uplink Control Channel (PUCCH).

In some embodiments, on the basis that the network device supports flexible configuration of the time-domain length of the first CP for the terminal's signal transmission, the CP time-domain length and the number of symbols in a slot can be in a one-to-one correspondence, that is, when the network device configures the first CP time-domain length for the terminal's signal transmission, the network device and the terminal can determine the number of symbols in a slot based on the first CP time-domain length.

Alternatively, on the basis that the network device supports flexible configuration of the time-domain length of the first CP for the terminal's signal transmission, the CP time-domain length may also correspond to multiple numbers of symbols in a slot, that is, one CP time-domain length corresponds to a set of symbol numbers, and the set of symbol numbers includes multiple numbers of symbols (for example, one slot includes 14 symbols, or one slot includes 12 symbols, or one slot includes 15 symbols, etc., which are not limited in the embodiments of the present disclosure). In some embodiments, when the indication information transmitted by the network device to the terminal indicates the time-domain length of the first CP for the terminal's signal transmission, the indication information may also be used to indicate the number of symbols in a slot. For example, the number of symbols in a slot indicated by the indication information may be selected from the set of symbol numbers, and different numbers of symbols may be configured for different subframes, etc., which are not limited in the embodiments of the present disclosure.

It is to be noted that in the embodiment of the present disclosure, the length of the slot can be expanded as the size of the symbol changes. For example, if the indication information indicates that a slot includes 14 symbols, the corresponding slot length is 1ms; if the indication information indicates that a slot includes 28 symbols, the corresponding slot length is a length of 28 symbols. However, no matter how long the different slots are, the CP time-domain length of the first symbol is longer than the CP time-domain lengths of other symbols in the slot.

In some embodiments, the time-domain length of the first CP indicated by the indication information is determined according to the transmission configuration-related information of the terminal and subcarrier spacing information.

For example, the network device preconfigures or the protocol predefines: corresponding relationship between a combination of the transmission configuration-related information and different subcarrier spacing information, and the CP time-domain length. In this way, the network device can determine the time-domain length of the first CP of the terminal's signal transmission based on the transmission configuration-related information of the terminal and the subcarrier spacing information. Alternatively, in case that the indication information transmitted by the network device indicates the CP time-domain length determined by the network device according to the transmission configuration-related information of the terminal, the terminal can determine, according to the network device configuration or protocol definition, the time-domain length of the first CP of the terminal's signal transmission based on the CP time-domain length indicated by the indication information and the subcarrier spacing information etc., which are not limited in the embodiments of the present disclosure.

In some embodiments, the information processing method further includes:
performing, by the terminal, an initial access process according to a time-domain length of the second CP; where the time-domain length of the second CP is preset.

The indication information is received during the initial access process, or is received after the initial access process.

For example, the preset time-domain length of the second CP may be a CP time-domain length for initial access of the terminal configured by the network device or defined by the protocol. Since the terminal does not know which CP type or CP time-domain length should be used when initially accessing, the terminal may use a certain CP type or CP time-domain length to search for the initial signal based on the agreement of the protocol.

For example, the process of the network device transmitting the indication information to the terminal during the initial access process may be: the terminal searches for synchronization signals based on the pre-set time-domain length of the second CP and then obtains a system message; after obtaining the system message, based on the indication of the system message, the terminal obtains the time-domain length of the first CP for the signal transmission indicated by the network device, which is not limited in the embodiments of the present disclosure.

For example, the process of the network device transmitting the indication information to the terminal after the initial access process may be: the terminal searches for synchronization signals based on the pre-set time-domain length of the second CP and then performs the initial access process; after completing the initial access process, the terminal can obtain an RRC-specific signaling message, and based on indication of the signaling message, obtain the time-domain length of the first CP for the signal transmission indicated by the network device, which is not limited in the embodiments of the present disclosure.

The terminal involved in the embodiments of the present disclosure may be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The information processing method of the present disclosure is described hereinafter in conjunction with specific embodiments.

Embodiment 1: based on different transmission configuration parameters, the network device configures different CP time-domain lengths for the terminal.

In order to increase adaptability of different scenarios, the network device (such as a base station) needs to support more flexible CP time-domain length configuration. For example, different CP time-domain lengths are defined for different deployment scenarios. As shown in Table 1, a specific example of CP configuration parameters is given.

**Table 1**

| scenario | CP time-domain length |
|---|---|
| indoor | 0.5us |
| urban | 1.0us |
| mountain | 2.0us |
| satellite | 0.5us |

Different CP time-domain lengths can be configured for different deployment scenarios, and different CP time-domain lengths can be configured for different multipath delays. For example, for scenarios dominated by LOS paths, a shorter CP time-domain length can be configured; for scenarios with higher frequency bands, a shorter CP time-domain length can be configured due to the greater attenuation of reflected signals.

For another example, different CP time-domain lengths are defined for different synchronization requirements. For example, the synchronization requirements include but are not limited to the following two:
tight synchronization mode: the terminal and the network maintain precise synchronization; in this case, the time-domain length of the CP can be configured to be shorter;
loose synchronization mode: synchronization accuracy of the terminal and the network device allows a certain error (for example, due to rapid movement of the terminal or the base station or inherent limitations in the terminal's synchronization capability); in this case, the time-domain length of the CP can be configured to be longer.

As shown in Table 2, another specific example of CP configuration parameters is given.

**Table 2**

| scenario | CP time-domain length configuration 1 (for tight synchronization mode) | CP time-domain length configuration 2 (for loose synchronization mode) |
|---|---|---|
| indoor | 0.5us | 1us |
| urban | 1.0us | 2.0us |
| mountain | 2.0us | 4.0us |
| satellite | 0.5us | 1us |

For another example, in a beam scanning scenario, each time the beam direction switches, the terminal needs to reacquire a downlink signal of the beam and then correct the synchronization error. At this point, the first symbol in the dwell time of each beam direction or wave position can be configured with a longer CP time-domain length to facilitate acquisition and tracking of terminal synchronization; starting from the second symbol (i.e., the symbol after the first symbol), a shorter CP time-domain length can be used. In the embodiment of the present disclosure, different CP time-domain lengths can be configured for different beam scanning methods. For example, this solution can meet needs of beam hopping scenarios in satellite communications.

As shown in Table 3, another specific example of CP configuration parameters is given.

**Table 3**

| symbol index within a time unit | CP time-domain length |
|---|---|
| Index=0 (i.e., the first symbol) | 2us |
| Index>0(i.e., symbol after the first symbol) | 0.5us |

In addition, for scenarios where users are not scheduled to transmit or receive data for a long time, there is also synchronization deviation when the network device schedules the first symbol for the user. Based on the CP configuration of the above time unit, a longer CP time-domain length can be used for transmission on the first symbol to assist the user in performing synchronization compensation and correction. Subsequently, the subsequent data symbols are received and the subsequent data symbols can use a shorter CP time-domain length.

In the above two scenarios, a time unit such as 1ms or 1 slot, can be pre-configured for the beam switching and data scheduling of the base station. The first symbol adopts a longer CP time-domain length, and subsequent data symbols can adopt a shorter CP time-domain length.

Embodiment 2: CP configuration of the network device and terminal access process.

When a terminal initially accesses, the terminal cannot know in advance a CP time-domain length configured by the network device based on transmission configuration-related information of the terminal, which leads to difficulties in signal detection. In order to support flexible CP configuration, the CP time-domain length can be notified to the terminal through the default configuration or in the system message for initial access.

The default configuration here refers to clear definition in the protocol specification that the terminal uses an agreed CP time-domain length when receiving a synchronization signal or a system message. The CP time-domain length notified to the terminal in the system message mainly refers to that the network device notifies the terminal through Master Information Block (MIB) or System Information Block (SIB) to use a specific CP time-domain length to perform initial access. During initial access, synchronization signal block (SSB) and other system messages can use different CP time-domain lengths, or can also use the same CP time-domain length, etc., which are not limited in the embodiments of the present disclosure.

During initial access, the terminal receives signals in the following process:
searching for, by the terminal, a synchronization signal based on the default or pre-agreed CP time-domain length, and then obtaining a system message;
after obtaining the system message, learning, by the terminal, CP time-domain length of a control channel and a data channel based on indication of the system message. After the terminal accesses, the CP time-domain length can also be configured for each terminal individually by using RRC signaling.

The system message may include broadcast message and other system messages, etc., which may be carried in a physical broadcast channel (PBCH) or SIB, etc., which are not limited in the embodiments of the present disclosure. As shown in Table 4, an example of bits of a system message indicate the CP time-domain length is given.

**Table 4**

| bit indication | CP time-domain length |
|---|---|
| 00 | 0.5us |
| 01 | 1.0us |
| 10 | 2.0us |
| 11 | 4.0us |

In some embodiments, the CP time-domain length may be further jointly determined in combination with subcarrier spacing information, that is, the CP time-domain length is jointly indicated by the subcarrier spacing information and the signaling, as shown in Table 5.

**Table 5**

| bit indication (2 bits) | CP time-domain length configuration 1 (subcarrier spacing≤60khz) | CP time-domain length configuration 2 (subcarrier spacing > 60khz) |
|---|---|---|
| 00 | 0.5us | 0.3us |
| 01 | 1.0us | 0.8us |
| 10 | 2.0us | 1.5us |
| 11 | 4.0us | 2.5us |

In some embodiments, in practical signaling indications, higher-layer signaling (such as RRC signaling) or physical-layer signaling (such as DCI) can also be used to indicate the CP type., and the time-domain length for each CP type is defined at the physical layer, as shown in Table 6.

**Table 6**

| bit indication (2 bits) | CP type (higher-layer) | CP time-domain length (physical layer) |
|---|---|---|
| 00 | type 1 | 0.5us |
| 01 | type 2 | 1.0us |
| 10 | type 3 | 2.0us |
| 11 | type 4 | 4.0us |

Embodiment 3: dynamic adjustment configuration of CP time-domain length by network device.

By taking the network device being a base station as an example, the base station supports the ability to dynamically adjust the time-domain length of the CP for the terminal. The base station can adjust the time-domain length configuration of the CP in different time periods and different scenarios. Meanwhile, the base station can also adjust the time-domain length configuration of the CP based on uplink synchronization performance or a request of the terminal.

An example of a base station adjusting the CP time-domain length is as follows:
when the terminal is moving at a low speed, the network device can configure a shorter CP time-domain length for the terminal for transmitting signals, which can resist smaller synchronization errors; when the terminal's moving speed increases, if the network device finds that there is a large deviation in the terminal's uplink synchronization, the network device can configure a longer CP time-domain length to support the terminal's synchronization error tolerance.

An example of a terminal actively requesting CP time-domain length adjustment is as follows:
in the satellite network, the terminal mainly performs synchronization adjustment based on the ephemeris error; if the terminal finds that there is a large error in its ephemeris, or the base station and the terminal move faster and cannot guarantee the uplink and downlink synchronization, the terminal is supported to actively request adjustment of the CP time-domain length; the terminal carries CP configuration request information for requesting the network device to adjust the CP time-domain length, through uplink control signaling or RRC message or MAC message; after obtaining the request information from the terminal, the network device adjusts configuration of the CP time-domain length of the terminal to ensure synchronization between the terminal and the network device, thereby improving the reliability of signal transmission.

In the process of dynamically adjusting the CP time-domain length, the network device needs to monitor status of the terminal, or the terminal actively transmits a request message, and then the network device adjusts the configuration of the CP time-domain length after obtaining information such as speed and synchronization capability of the terminal.

In scenarios where multiple terminals coexist, the same CP time-domain length configuration needs to be used in the same slot, otherwise interference will occur between the terminals.

Embodiment 4: in view of differences between uplink transmission and downlink transmission, the network device adjusts configuration of the CP time-domain length.

In downlink transmission, a signal flow is transmitted by one base station and received by multiple terminals; in uplink transmission, signal flows are transmitted by multiple terminals and received by one base station. Considering that there is no difference in transmission delay between multiple terminals during downlink transmission, the CP time-domain length can be configured to be very short, or there is no CP, that is, the CP time-domain length is 0 (in the LOS path). In uplink transmission, the CP time-domain length needs to consider the time deviation from different terminals to the base station. Since different terminals usually cannot maintain complete synchronization during uplink transmission, the network device needs to configure the necessary CP time-domain length for uplink transmission.

For example, in a satellite scenario, the channel type is usually a LOS channel, and thus the multipath delay of the channel is very small. In downlink transmission, a very short CP time-domain length can be configured, or the CP time-domain length can be 0. For uplink transmission, the synchronization error of different terminals mainly comes from errors caused by the satellite's ephemeris estimation error, the terminal's movement and clock offset, etc., therefore it is difficult to ensure alignment of uplink signals of the terminals on the base station side. At this point, the network device needs to configure the necessary CP time-domain length for uplink transmission.

As shown in Table 7, another example of CP configuration parameters is given.

**Table 7**

| CP time-domain length for uplink transmission | CP time-domain length for downlink transmission |
|---|---|
| CP1=4us | CP1=2us |
| CP2=2us | CP2=1us |
| CP3=1us | CP3=0us |
| CP4=0.5us | CP4=0us |

In future mobile communication systems, system design should allow uplink transmission and downlink transmission to be configured with different CP time-domain lengths to improve resource utilization efficiency.

Embodiment 5: for adjustment of the CP time-domain length, configuration of the number of slot symbols needs to be updated synchronously.

Since the time length of a subframe is fixed, configuration of different CP time-domain lengths may result in differences in the number of symbols in a subframe. In order to ensure efficient use of slot resources, it is necessary to allow the number of symbols in different slots to be different, which also causes sizes of transmitted data packets in different slots to change.

For example, in a slot, when a longer CP time-domain length is used, a slot includes 12 symbols; if a shorter CP time-domain length is used, a slot includes 14 symbols; if CP of zero (i.e., CP time-domain length is 0) is used, a slot includes 15 symbols. Therefore, different CP time-domain lengths will bring about changes in the frame structure. When different subframes use different CP configurations, the network device can use different data symbol transmission formats in different subframes. Due to changes in TB Size brought about by different numbers of symbols, the system capacity can be improved.

As shown in Table 8, an example of change in the number of symbols corresponding to different CP time-domain lengths is given.

**Table 8**

| CP time-domain length configuration format | CP configuration for different slots |
|---|---|
| configuration type 1, number of symbols per slot=12 | CP configuration type 1 is used for subframe 1 |
| configuration type 2, number of symbols per slot=14 | CP configuration type 2 is used for subframe 2 |
| configuration type 3, number of symbols per slot=15 | CP configuration type 3 is used for subframe 3 |

For different users, if CP time-domain lengths are different, different numbers of symbols are also supported. This means that the CP time-domain length can be terminal-specific, and the network device can configure different CP time-domain lengths for different terminals. Further, when scheduling terminals, the network device may schedule different terminals in different slots, and then use different frame configurations for different terminals, and the number of symbols and pilot symbols sent is also different.

The embodiment introduces the information processing method of the present disclosure. The following embodiments will further illustrate the corresponding device, network device and terminal in conjunction with the accompanying drawings.

As shown in FIG. 3, one embodiment of the present disclosure provides an information processing device, which includes a memory 31, a transceiver 32, and a processor 33. The memory 31 is used to store a computer program. The transceiver 32 is used to send and receive data under the control of the processor 33; for example, the transceiver 32 is used to receive and send data under the control of the processor 33. The processor 33 is used to read the computer program in the memory 31 and perform the following operations:
determining a time-domain length of a first cyclic prefix (CP) for a terminal's signal transmission according to transmission configuration-related information of the terminal;
transmitting indication information to the terminal; where the indication information is used to indicate the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, the processor 33 is configured to read the computer program in the memory 31 and perform the following operations:
in case where the transmission configuration-related information of the terminal includes that the signal transmission of the terminal is downlink transmission, determining that the time-domain length of the first CP for the terminal's signal transmission is equal to 0, or determining that the time-domain length of the first CP for the terminal's signal transmission is greater than 0;
   and/or,
in case where the transmission configuration information of the terminal includes the signal transmission time unit, determining a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message. That is, the processor 33 is used to read the computer program in the memory 31 and perform the following operations:
transmitting a first message to the terminal; where the first message carries the indication information.

In some embodiments, the first message includes at least one of the following:
system broadcast message;
radio resource control (RRC) message;
medium access control (MAC) message;
downlink control information (DCI).

In some embodiments, the processor 33 is configured to read the computer program in the memory 31 and perform the following operations:
receiving a second message transmitted by the terminal; where the second message carries the transmission configuration-related information of the terminal and/or CP configuration request information of the terminal;
determining the time-domain length of the first CP for the terminal's signal transmission, according to the second message and in combination with the transmission configuration-related information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot.

In some embodiments, the processor 33 is configured to read the computer program in the memory 31 and perform the following operations:
determining the time-domain length of the first CP for the terminal's signal transmission according to the transmission configuration-related information of the terminal and subcarrier spacing information.

In some embodiments, the processor is configured to read the computer program in the memory and perform the following operations:
performing an initial access process of the terminal according to the time-domain length of the second CP; where the time-domain length of the second CP is preset.

The indication information is transmitted by the network device to the terminal during the initial access process, or is transmitted by the network device to the terminal after the initial access process.

In FIG. 3, a bus architecture may include any number of interconnected bus and bridge. Specifically, various circuits of one or more processors, which are represented by the processor 33, and one or more memories, which are represented by the memory 31, are linked together. The bus architecture may link various other circuits, such as a peripheral device, voltage regulator and a power management circuit together. These features are well known in this field; therefore, the present disclosure does not make further description on these features. The bus interface provides an interface. The transceiver 32 may be multiple elements, including a transmitter and a receiver and provide units, which communicate with other devices on the transmission medium. The transmission medium includes radio channels, wired channels, optical cables, etc. The processor 33 is responsible for managing the bus architecture and the normal processing. The memory 31 may be used to store data used by the processor 33 for performing operations.

The processor 33 may be a central processing unit (CPU), an application specific integrated circuit (ASIC), a field-programmable gate array (FPGA) or a complex programmable logic device (CPLD). The processor may also adopt multi-core architecture.

It is to be noted here that the above information processing device provided in the embodiment of the present disclosure can implement all the method steps implemented by the above information processing method embodiment on the network device side, and can achieve the same technical effect. The parts and beneficial effects of this embodiment that are the same as the method embodiment will not be described in detail here.

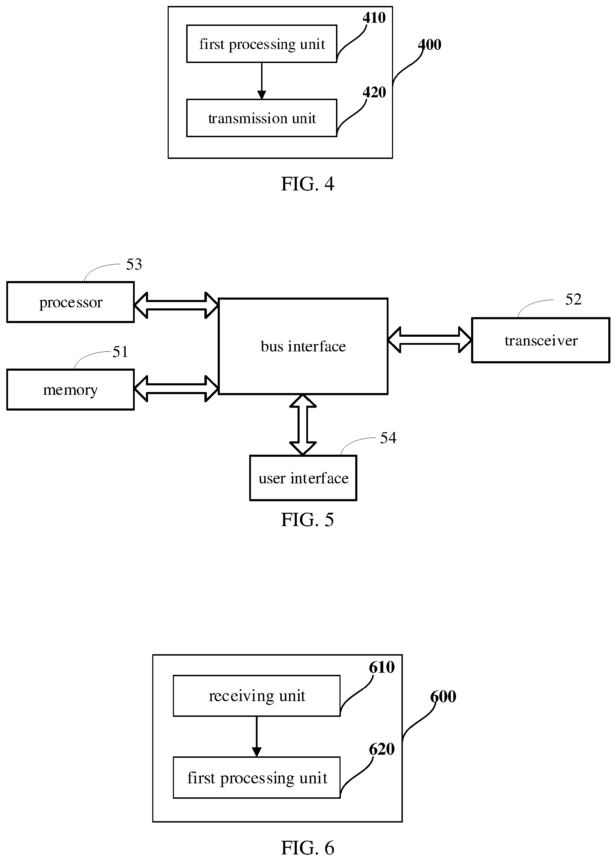

As shown in FIG. 4, one embodiment of the present disclosure provides a network device 400, including:
a first processing unit 410 used to determine a time-domain length of a first cyclic prefix (CP) for a terminal's signal transmission according to transmission configuration-related information of the terminal;
a transmission unit 420 used to transmit indication information to the terminal; where the indication information is used to indicate the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, the first processing unit 410 is further used to:
in case where the transmission configuration-related information of the terminal includes that the signal transmission of the terminal is downlink transmission, determine that the time-domain length of the first CP for the terminal's signal transmission is equal to 0, or determine that the time-domain length of the first CP for the terminal's signal transmission is greater than 0;
   and/or,
in case where the transmission configuration information of the terminal includes the signal transmission time unit, determine a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message. That is, the transmission unit 420 is further used to:
transmit a first message to the terminal; where the first message carries the indication information.

In some embodiments, the first message includes at least one of the following:
system broadcast message;
radio resource control (RRC) message;
medium access control (MAC) message;
downlink control information (DCI).

In some embodiments, the first processing unit 410 is further used to:
receive a second message transmitted by the terminal; where the second message carries the transmission configuration-related information of the terminal and/or CP configuration request information of the terminal;
determine the time-domain length of the first CP for the terminal's signal transmission, according to the second message and in combination with the transmission configuration-related information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot.

In some embodiments, the first processing unit 410 is further used to:
determine the time-domain length of the first CP for the terminal's signal transmission according to the transmission configuration-related information of the terminal and subcarrier spacing information.

In some embodiments, the network device 400 further includes:
a second processing unit used to perform an initial access process of the terminal according to the time-domain length of the second CP; where the time-domain length of the second CP is preset.

The indication information is transmitted by the network device to the terminal during the initial access process, or is transmitted by the network device to the terminal after the initial access process.

It is to be noted here that the above network device provided in the embodiment of the present disclosure can implement all the method steps implemented by the above information processing method embodiment on the network device side, and can achieve the same technical effect. The parts and beneficial effects of this embodiment that are the same as the method embodiment will not be described in detail here.

As shown in FIG. 5, one embodiment provides an information processing device, which includes a memory 51, a transceiver 52, and a processor 53. The memory 51 is used to store a computer program. The transceiver 52 is used to send and receive data under the control of the processor; for example, the transceiver 52 is used to receive and send data under the control of the processor 53. The processor 53 is used to read the computer program in the memory 51 and perform the following operations:
receiving indication information transmitted by a network device; where the indication information is used to indicate a time-domain length of a first CP for the terminal's signal transmission, and the time-domain length of the first CP is determined according to transmission configuration-related information of the terminal;
performing signal transmission according to the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0;
and/or,
in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message. That is, the processor 53 is used to read the computer program in the memory 51 and perform the following operations:
receiving a first message transmitted by the network device; where the first message carries the indication information.

In some embodiments, the first message includes at least one of the following:
system broadcast message;
radio resource control (RRC) message;
medium access control (MAC) message;
downlink control information (DCI).

In some embodiments, the processor 53 is configured to read the computer program in the memory 51 and perform the following operations:
transmitting a second message to the network device; where the second message carries transmission configuration-related information of the terminal and/or CP configuration request information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot;
and/or,
the time-domain length of the first CP indicated by the indication information is determined according to the transmission configuration-related information of the terminal and subcarrier spacing information.

In some embodiments, the processor 53 is configured to read the computer program in the memory 51 and perform the following operations:
performing an initial access process according to a time-domain length of the second CP; where the time-domain length of the second CP is preset.

The indication information is received during the initial access process, or is received after the initial access process.

In FIG. 5, a bus architecture may include any number of interconnected bus and bridge. Specifically, various circuits of one or more processors, which are represented by the processor 53, and one or more memories, which are represented by the memory 51, are linked together. The bus architecture may link various other circuits, such as a peripheral device, voltage regulator and a power management circuit together. These features are well known in this field; therefore, this disclosure does not make further description on these features. The bus interface provides an interface. The transceiver 52 may be multiple elements, including a transmitter and a receiver and provide units, which communicate with other devices on the transmission medium. The transmission medium includes radio channels, wired channels, optical cables, etc. For different UEs, a user interface 54 may be an interface that can be connected to external or internal devices. The connected devices include but are not limited to a small keyboard, a display, a speaker, a microphone, a joystick, etc.

The processor 53 is responsible for managing the bus architecture and the normal processing. The memory 51 may be used to store data used by the processor 53 for performing operations.

Optionally, the processor 53 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above information processing device provided in the embodiment of the present disclosure can implement all the method steps implemented by the above information processing method embodiment on the terminal side, and can achieve the same technical effect. The parts and beneficial effects of this embodiment that are the same as the method embodiment will not be described in detail here.

As shown in FIG. 6, one embodiment of the present disclosure provides a terminal 600, including:
a receiving unit 610 used to receive indication information transmitted by a network device; where the indication information is used to indicate a time-domain length of a first CP for the terminal's signal transmission, and the time-domain length of the first CP is determined according to transmission configuration-related information of the terminal;
a first processing unit 620 used to perform signal transmission according to the time-domain length of the first CP.

In some embodiments, the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal;
signal transmission time unit.

In some embodiments, in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0;
and/or,
in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
where the first CP for the first symbol is used for signal synchronization tracking, the first CP for the second symbol is used for signal detection, and the time-domain length of the first CP for the first symbol is greater than the time-domain length of the first CP for the second symbol.

In some embodiments, the first symbol is a first symbol in the time unit, and the second symbol is a symbol other than the first symbol in the time unit.

In some embodiments, the signal transmission time unit includes at least one of the following:
a time unit used for scheduling data of different beams;
a time unit used for scheduling different user data.

In some embodiments, the indication information is carried by a first message. That is, the receiving unit 610 is also used to:
receive a first message transmitted by the network device; where the first message carries the indication information.

In some embodiments, the first message includes at least one of the following:
system broadcast message;
radio resource control (RRC) message;
medium access control (MAC) message;
downlink control information (DCI).

In some embodiments, the terminal 600 further includes:
a transmission unit used to transmit a second message to the network device; where the second message carries transmission configuration-related information of the terminal and/or CP configuration request information of the terminal.

In some embodiments, the second message includes at least one of the following:
RRC message;
MAC message;
messages carried by Physical Uplink Control Channel (PUCCH).

In some embodiments, the indication information is further used to indicate the number of symbols in a slot;
and/or,
the time-domain length of the first CP indicated by the indication information is determined according to the transmission configuration-related information of the terminal and subcarrier spacing information.

In some embodiments, the terminal 600 further includes:
a second processing unit used to perform an initial access process according to a time-domain length of the second CP; where the time-domain length of the second CP is preset.

The indication information is received during the initial access process, or is received after the initial access process.

It is to be noted here that the above terminal provided in the embodiment of the present disclosure can implement all the method steps implemented by the above information processing method embodiment on the terminal side, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which stores a computer program. The computer program is used to cause a processor to execute the steps of the information processing method on the network device side or to cause the processor to execute the steps of the information processing method on the terminal side, can achieve the same technical effect. The parts and beneficial effects of this embodiment that are the same as the method embodiment will not be described in detail here.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It is to be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An information processing method, comprising:
determining, by a network device, a time-domain length of a first cyclic prefix (CP) for a terminal's signal transmission according to transmission configuration-related information of the terminal; and
transmitting, by the network device, indication information to the terminal; wherein the indication information is used to indicate the time-domain length of the first CP.

2. The method according to claim 1, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

3. The method according to claim 2, wherein the determining, by a network device, a time-domain length of a first cyclic prefix (CP) for a terminal's signal transmission according to transmission configuration-related information of the terminal, includes:
in case where the transmission configuration-related information of the terminal includes that the signal transmission of the terminal is downlink transmission, determining, by the network device, that the time-domain length of the first CP for the terminal's signal transmission is equal to 0, or determining that the time-domain length of the first CP for the terminal's signal transmission is greater than 0.

4. The method according to claim 2, wherein the determining, by a network device, a time-domain length of a first cyclic prefix (CP) for a terminal's signal transmission according to transmission configuration-related information of the terminal, includes:
in case where the transmission configuration information of the terminal includes the signal transmission time unit, determining, by the network device, a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

5. The method according to claim 4, wherein the first symbol is a first symbol in the time unit, and the second symbol is a symbol other than the first symbol in the time unit.

6. The method according to claim 4, wherein the signal transmission time unit includes at least one of the following:
a time unit used for scheduling data of different beams; or,
a time unit used for scheduling different user data.

7. The method according to any one of claims 1 to 6, wherein the indication information is carried by a first message; and the first message includes at least one of the following:
system broadcast message;
radio resource control (RRC) message;
medium access control (MAC) message; or,
downlink control information (DCI).

8. The method according to any one of claims 1 to 6, wherein the determining, by a network device, a time-domain length of a first cyclic prefix (CP) for a terminal's signal transmission according to transmission configuration-related information of the terminal, includes:
receiving a second message transmitted by the terminal; wherein the second message carries the transmission configuration-related information of the terminal and/or CP configuration request information of the terminal; and
determining the time-domain length of the first CP for the terminal's signal transmission, according to the second message and in combination with the transmission configuration-related information of the terminal.

9. The method according to claim 8, wherein the second message includes at least one of the following:
radio resource control (RRC) message;
medium access control (MAC) message; or
messages carried by Physical Uplink Control Channel (PUCCH).

10. The method according to any one of claims 1 to 6, wherein the indication information is further used to indicate the number of symbols in a slot.

11. The method according to any one of claims 1 to 6, wherein the determining, by a network device, a time-domain length of a first cyclic prefix (CP) for a terminal's signal transmission according to transmission configuration-related information of the terminal, includes:
determining, by the network device, the time-domain length of the first CP for the terminal's signal transmission according to the transmission configuration-related information of the terminal and subcarrier spacing information.

12. The method according to any one of claims 1 to 6, wherein the method further includes:
performing an initial access process of the terminal according to the time-domain length of the second CP; wherein the time-domain length of the second CP is preset;
wherein the indication information is transmitted by the network device to the terminal during the initial access process, or is transmitted by the network device to the terminal after the initial access process.

13. An information processing method, comprising:
receiving, by a terminal, indication information transmitted by a network device; wherein the indication information is used to indicate a time-domain length of a first CP for the terminal's signal transmission, and the time-domain length of the first CP is determined according to transmission configuration-related information of the terminal; and
performing, by the terminal, signal transmission according to the time-domain length of the first CP.

14. The method according to claim 13, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

15. The method according to claim 14, wherein in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0.

16. The method according to claim 14, wherein in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

17. The method according to claim 16, wherein the first symbol is a first symbol in the time unit, and the second symbol is a symbol other than the first symbol in the time unit.

18. The method according to claim 16, wherein the signal transmission time unit includes at least one of the following:
a time unit used for scheduling data of different beams; or,
a time unit used for scheduling different user data.

19. The method according to any one of claims 13 to 18, wherein the indication information is carried by a first message; and the first message includes at least one of the following:
system broadcast message;
radio resource control (RRC) message;
medium access control (MAC) message; or,
downlink control information (DCI).

20. The method according to any one of claims 13 to 18, wherein before the terminal receives the indication information transmitted by the network device, the method further includes:
transmitting, by the terminal, a second message to the network device; wherein the second message carries transmission configuration-related information of the terminal and/or CP configuration request information of the terminal.

21. The method according to claim 20, wherein the second message includes at least one of the following:
radio resource control (RRC) message;
medium access control (MAC) message; or,
messages carried by Physical Uplink Control Channel (PUCCH).

22. The method according to any one of claims 13 to 18, wherein the indication information is further used to indicate the number of symbols in a slot;
and/or,
the time-domain length of the first CP indicated by the indication information is determined according to the transmission configuration-related information of the terminal and subcarrier spacing information.

23. The method according to any one of claims 13 to 18, wherein the method further includes:
performing an initial access process according to a time-domain length of the second CP; wherein the time-domain length of the second CP is preset;
wherein the indication information is received during the initial access process, or is received after the initial access process.

24. An information processing device, comprising: a memory, a transceiver, and a processor;
wherein the memory is used to store a computer program; the transceiver is used to send and receive data under control of the processor; the processor is used to read the computer program in the memory and perform the following operations:
determining a time-domain length of a first cyclic prefix (CP) for a terminal's signal transmission according to transmission configuration-related information of the terminal; and
transmitting indication information to the terminal; wherein the indication information is used to indicate the time-domain length of the first CP.

25. The device according to claim 24, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

26. The device according to claim 25, wherein the processor is used to read the computer program in the memory and perform the following operations:
in case where the transmission configuration-related information of the terminal includes that the signal transmission of the terminal is downlink transmission, determining that the time-domain length of the first CP for the terminal's signal transmission is equal to 0, or determining that the time-domain length of the first CP for the terminal's signal transmission is greater than 0;
and/or,
in case where the transmission configuration information of the terminal includes the signal transmission time unit, determining a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

27. The device according to claim 26, wherein the first symbol is a first symbol in the time unit, and the second symbol is a symbol other than the first symbol in the time unit.

28. The device according to claim 26, wherein the signal transmission time unit includes at least one of the following:
a time unit used for scheduling data of different beams; or,
a time unit used for scheduling different user data.

29. The device according to any one of claims 24 to 28, wherein the indication information is carried by a first message; and the first message includes at least one of the following:
system broadcast message;
radio resource control (RRC) message;
medium access control (MAC) message; or,
downlink control information (DCI).

30. The device according to any one of claims 24 to 28, wherein the processor is used to read the computer program in the memory and perform the following operations:
receiving a second message transmitted by the terminal; wherein the second message carries the transmission configuration-related information of the terminal and/or CP configuration request information of the terminal; and
determining the time-domain length of the first CP for the terminal's signal transmission, according to the second message and in combination with the transmission configuration-related information of the terminal.

31. The device according to claim 30, wherein the second message includes at least one of the following:
radio resource control (RRC) message;
medium access control (MAC) message; or,
messages carried by Physical Uplink Control Channel (PUCCH).

32. The device according to any one of claims 24 to 28, wherein the indication information is further used to indicate the number of symbols in a slot.

33. The device according to any one of claims 24 to 28, wherein the processor is used to read the computer program in the memory and perform the following operations:
determining the time-domain length of the first CP for the terminal's signal transmission according to the transmission configuration-related information of the terminal and subcarrier spacing information.

34. The device according to any one of claims 24 to 28, wherein the processor is used to read the computer program in the memory and perform the following operations:
performing an initial access process of the terminal according to the time-domain length of the second CP; wherein the time-domain length of the second CP is preset;
wherein the indication information is transmitted by the network device to the terminal during the initial access process, or is transmitted by the network device to the terminal after the initial access process.

35. A network device, comprising:
a first processing unit used to determine a time-domain length of a first cyclic prefix (CP) for a terminal's signal transmission according to transmission configuration-related information of the terminal; and
a transmission unit used to transmit indication information to the terminal; wherein the indication information is used to indicate the time-domain length of the first CP.

36. The device according to claim 35, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

37. The device according to claim 36, wherein the first processing unit is further used to:
in case where the transmission configuration-related information of the terminal includes that the signal transmission of the terminal is downlink transmission, determine that the time-domain length of the first CP for the terminal's signal transmission is equal to 0, or determining that the time-domain length of the first CP for the terminal's signal transmission is greater than 0;
and/or,
in case where the transmission configuration information of the terminal includes the signal transmission time unit, determine a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

38. The device according to claim 37, wherein the first symbol is a first symbol in the time unit, and the second symbol is a symbol other than the first symbol in the time unit.

39. The device according to claim 37, wherein the signal transmission time unit includes at least one of the following:
a time unit used for scheduling data of different beams; or,
a time unit used for scheduling different user data.

40. The device according to any one of claims 35 to 39, wherein the indication information is carried by a first message; and the first message includes at least one of the following:
system broadcast message;
radio resource control (RRC) message;
medium access control (MAC) message; or,
downlink control information (DCI).

41. The device according to any one of claims 35 to 39, wherein the first processing unit is further used to:
receive a second message transmitted by the terminal; wherein the second message carries the transmission configuration-related information of the terminal and/or CP configuration request information of the terminal; and
determine the time-domain length of the first CP for the terminal's signal transmission, according to the second message and in combination with the transmission configuration-related information of the terminal.

42. The device according to claim 41, wherein the second message includes at least one of the following:
radio resource control (RRC) message;
medium access control (MAC) message; or,
messages carried by Physical Uplink Control Channel (PUCCH).

43. The device according to any one of claims 35 to 39, wherein the indication information is further used to indicate the number of symbols in a slot.

44. The device according to any one of claims 35 to 39, wherein the first processing unit is further used to:
determine the time-domain length of the first CP for the terminal's signal transmission according to the transmission configuration-related information of the terminal and subcarrier spacing information.

45. The device according to any one of claims 35 to 39, wherein the device further includes:
a second processing unit used to perform an initial access process of the terminal according to the time-domain length of the second CP; wherein the time-domain length of the second CP is preset;
wherein the indication information is transmitted by the network device to the terminal during the initial access process, or is transmitted by the network device to the terminal after the initial access process.

46. An information processing device, comprising: a memory, a transceiver, and a processor;
wherein the memory is used to store a computer program; the transceiver is used to send and receive data under control of the processor; the processor is used to read the computer program in the memory and perform the following operations:
receiving indication information transmitted by a network device; wherein the indication information is used to indicate a time-domain length of a first CP for the terminal's signal transmission, and the time-domain length of the first CP is determined according to transmission configuration-related information of the terminal; and
performing signal transmission according to the time-domain length of the first CP.

47. The device according to claim 46, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

48. The device according to claim 47, wherein in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0;
and/or,
in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

49. The device according to claim 48, wherein the first symbol is a first symbol in the time unit, and the second symbol is a symbol other than the first symbol in the time unit.

50. The device according to claim 48, wherein the signal transmission time unit includes at least one of the following:
a time unit used for scheduling data of different beams; or,
a time unit used for scheduling different user data.

51. The device according to any one of claims 46 to 50, wherein the indication information is carried by a first message; and the first message includes at least one of the following:
system broadcast message;
radio resource control (RRC) message;
medium access control (MAC) message; or,
downlink control information (DCI).

52. The device according to any one of claims 46 to 50, wherein the processor is used to read the computer program in the memory and perform the following operations:
transmitting a second message to the network device; wherein the second message carries transmission configuration-related information of the terminal and/or CP configuration request information of the terminal.

53. The device according to claim 52, wherein the second message includes at least one of the following:
radio resource control (RRC) message;
medium access control (MAC) message; or,
messages carried by Physical Uplink Control Channel (PUCCH).

54. The device according to any one of claims 46 to 50, wherein the indication information is further used to indicate the number of symbols in a slot;
and/or,
the time-domain length of the first CP indicated by the indication information is determined according to the transmission configuration-related information of the terminal and subcarrier spacing information.

55. The device according to any one of claims 46 to 50, wherein the processor is used to read the computer program in the memory and perform the following operations:
performing an initial access process according to a time-domain length of the second CP; wherein the time-domain length of the second CP is preset; and
wherein the indication information is received during the initial access process, or is received after the initial access process.

56. A terminal, comprising:
a receiving unit used to receive indication information transmitted by a network device; wherein the indication information is used to indicate a time-domain length of a first CP for the terminal's signal transmission, and the time-domain length of the first CP is determined according to transmission configuration-related information of the terminal; and
a first processing unit used to perform signal transmission according to the time-domain length of the first CP.

57. The terminal according to claim 56, wherein the transmission configuration-related information of the terminal includes at least one of the following:
a terminal type or capability of the terminal;
mobile state information of the terminal;
the signal transmission of the terminal being uplink transmission or downlink transmission;
deployment scenario of the terminal;
synchronization requirement of the terminal; or,
signal transmission time unit.

58. The terminal according to claim 57, wherein in case where the transmission configuration-related information of the terminal includes that the signal transmission of the terminal is downlink transmission, the indication information is used to indicate that the time-domain length of the first CP for the terminal's signal transmission is equal to 0, or that the time-domain length of the first CP for the terminal's signal transmission is greater than 0;
and/or,
in case where the transmission configuration information of the terminal includes the signal transmission time unit, the indication information is used to indicate a time-domain length of a first CP for a first symbol of the terminal's signal transmission in the time unit, and a time-domain length of a first CP for a second symbol of the terminal's signal transmission in the time unit;
wherein the first CP for the first symbol is used for signal synchronization tracking, the first CP for the second symbol is used for signal detection, and the time-domain length of the first CP for the first symbol is greater than the time-domain length of the first CP for the second symbol.

59. The terminal according to claim 58, wherein the first symbol is a first symbol in the time unit, and the second symbol is a symbol other than the first symbol in the time unit.

60. The terminal according to claim 58, wherein the signal transmission time unit includes at least one of the following:
a time unit used for scheduling data of different beams; or,
a time unit used for scheduling different user data.

61. The terminal according to any one of claims 56 to 60, wherein the indication information is carried by a first message; and the first message includes at least one of the following:
system broadcast message;
radio resource control (RRC) message;
medium access control (MAC) message; or,
downlink control information (DCI).

62. The terminal according to any one of claims 56 to 60, wherein the terminal further includes:
a transmission unit used to transmit a second message to the network device; wherein the second message carries transmission configuration-related information of the terminal and/or CP configuration request information of the terminal.

63. The terminal according to claim 62, wherein the second message includes at least one of the following:
radio resource control (RRC) message;
medium access control (MAC) message; or,
messages carried by Physical Uplink Control Channel (PUCCH).

64. The terminal according to any one of claims 56 to 60, wherein the indication information is further used to indicate the number of symbols in a slot;
and/or,
the time-domain length of the first CP indicated by the indication information is determined according to the transmission configuration-related information of the terminal and subcarrier spacing information.

65. The terminal according to any one of claims 56 to 60, wherein the terminal further includes:
a second processing unit used to perform an initial access process according to a time-domain length of the second CP; wherein the time-domain length of the second CP is preset;
wherein the indication information is received during the initial access process, or is received after the initial access process.

66. A processor-readable storage medium, comprising a computer program stored thereon; wherein the computer program is used to cause a processor to execute the method according to any one of claims 1 to 12, or, the computer program is used to cause a processor to execute the method according to any one of claims 13 to 23.
